# FASCICULE DE BREVET EUROPEEN

(11) **EP 1 120 333 B1**
(45) Date de publication et mention de la délivrance du brevet: **26.04.2006**
(21) Numéro de dépôt: 01400163.0
(22) Date de dépôt: 19.01.2001
(51) Int. Cl.: B62D 53/06

(54) **Col de cygne dépliable pour semi-remorque**
Aufliegeranhänger mit faltbarem Schwanenhals
Retractable gooseneck for semitrailer

(30) Priorité: 25.01.2000 FR 0000906
(43) Date de publication de la demande: 01.08.2001
(73) Titulaire: Nicolas Industrie, 89290 Champs sur Yonne (FR)
(72) Inventeur: Darlot, Daniel, 89230 Venouse (FR)
(74) Mandataire: Loisel, Bertrand

(56) Documents cités:
- EP-A- 0 040 542
- GB-A- 2 158 025
- US-A- 2 858 950

## Description

La présente invention concerne les cols de cygne raccordables à une plate-forme de transport munie d'un arrière train à roues, comprenant un plateau solidarisable de la plate-forme de transport et un bras d'appui sur une sellette de tracteur. Elle concerne notamment les cols de cygne destinés à des semi-remorques de transport de véhicules à chargement par l'avant.

On connaît déjà des cols de cygnes dépliables et repliables à l'aide d'au moins un vérin hydraulique à double effet, utilisant une liaison constituant un parllèlogramme déformable entre le bras et le plateau.

Par US-A-2 858 950, on connaît un col de cygne dépliable pour semi-remorque comprenant un plateau solidarisable d'une plate-forme de transport et un bras d'appui sur une sellette de tracteur, ledit bras étant relié au plateau par une bielle articulée et par au moins un second organe articulé, les points d'articulation de la bielle et dudit second organe étant placés aux coins d'un quadrilatère, les liaisons entre le bras et le plateau comprenant de plus au moins une barre verrouillable sur le plateau et par rapport au bras dans une position où ladite barre fixe la distance entre deux points situés à proximité des extrémités d'une diagonale du quadrilatère.

Dans cette réalisation, le second organe est une autre bielle articulée, sensiblement parallèle à la première, de sorte à former un parallélogramme déformable, permettant le dépliage du col de cygne amenant le bras, après qu'il soit dételé de la sellette du tracteur, dans le prolongement à l'avant du plateau abaissé jusqu'à reposer sur le sol, pour permettre le chargement ou déchargement de la plate-forme de transport, le bras restant sensiblement parallèle au plateau dans toutes les positions du col de cygne, y compris pendant les mouvements de dépliage et repliage.

Par ailleurs, on connaît par GB-A-2 158 025 un col de cygne détachable, et non dépliable, dont le bras est monté pivotant autour d'un pivot transversal à l'avant de l'extrémité supérieure d'au moins une tour se fixant rigidement, mais de manière détachable, sur l'avant de la plate-forme de chargement d'une semi-remorque, de sorte que les chargements et déchargements de la plate-forme reposée sur le sol s'effectuent après que chaque tour a été détachée de la plate-forme de transport, pour pouvoir éloigner de cette plate-forme de la semi-remorque le tracteur et le col de cygne, qui reste attelé sur le tracteur. En position de transport de charge, les pivotements du bras par rapport au tracteur, pour modifier la garde au sol de la plate-forme, sont commandés par au moins un vérin hydraulique sensiblement vertical, logé dans la ou chaque tour et articulé sur l'arrière du bras, en arrière du pivot transversal de liaison du bras à la tour ou à chacune d'elles.

L'invention vise à fournir un col de cygne dépliable, et non détachable, fournissant une plus grande latitude quant au déplacement relatif du plateau et du bras, notamment en vue de permettre un abaissement ou une élévation du plateau alors que le bras repose sur la sellette, notamment pour augmenter ou diminuer la garde au sol en fonction du profil de la route.

Dans ce but, l'invention propose notamment un col de cygne dépliable pour semi-remorque, du type connu par US-A- 2 858 950, qui reprend les caractéristiques du préambule de la revendication 1, et tel que présenté ci-dessus, et qui se caractérise en ce que ledit second organe (reliant le plateau au bras) est un vérin à double effet.

En général, deux barres seront prévues et placées chacune de l'un respectivement des deux côtés de l'ensemble plateau-bras. Une extrémité de chaque barre sera par exemple articulée de façon permanente sur le plateau de façon que la barre puisse tourner sur le plateau autour d'un axe transversal au plateau, proche de l'axe d'articulation du vérin sur le plateau, et l'autre extrémité de la barre est verrouillable ou déverrouillable sur le bras par des moyens permettant à la barre de tourner sur le bras autour d'un axe transversal au bras, proche de l'axe d'articulation de la bielle sur le bras ou, mieux, aligné avec lui. Pour permettre de laisser les barres en permanence sur le col de cygne, l'extrémité verrouillable sur le bras peut être guidée par un chemin et venir en butée à l'extrémité du chemin dans la position où elle est verrouillée lors des déplacements sur route.

Lorsque la barre ou les barres sont verrouillées, il est possible d'élever ou d'abaisser le plateau, et en conséquence l'avant de la plate-forme, par actionnement du vérin ou des vérins qui reprennent la charge de la plate-forme. Les mêmes vérins permettent de déplier ou de replier le col de cygne lorsque les barres sont déverrouillées et notamment d'amener le col de cygne à plat en vue de son stockage. Le bras peut être équipé d'un caisson de direction comportant des cylindres reliés à des vérins de direction équipant les essieux de l'arrière-train.

Les caractéristiques ci-dessus ainsi que d'autres apparaîtront mieux à la lecture de la description qui suit d'un mode particulier de réalisation, donné à titre d'exemple non limitatif. La description se réfère aux dessins qui l'accompagnent, dans lesquels :
- la figure 1 est une vue en élévation d'une semi-remorque munie d'un col de cygne suivant un mode de réalisation de l'invention ;
- la figure 2, similaire à une fraction de la figure 1, montre le col de cygne dans un état différent ;
- la figure 3 est une vue en élévation du col de cygne posé au sol, dans plusieurs états
- la figure 4 est une vue de dessus du col de cygne reposant sur le sol, à l'état totalement déplié, permettant le chargement d'un wagon ou d'une voiture.

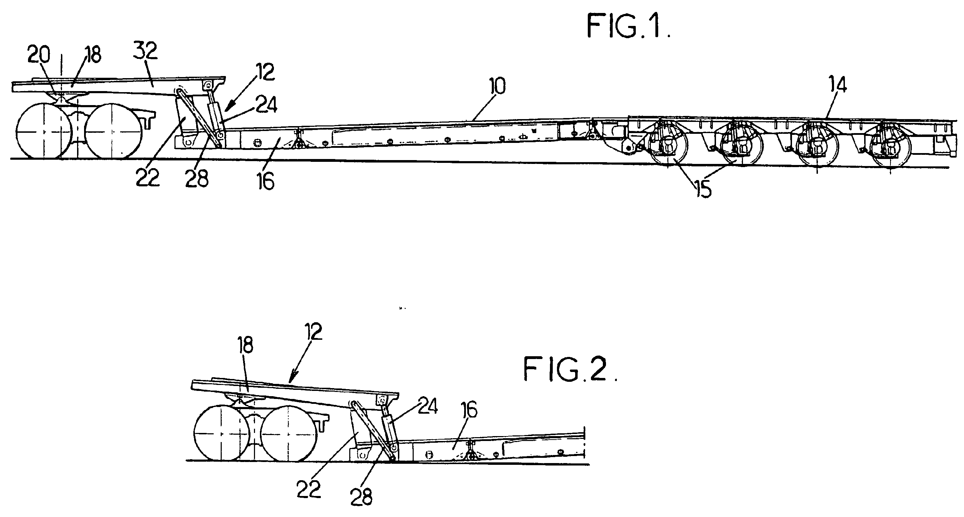

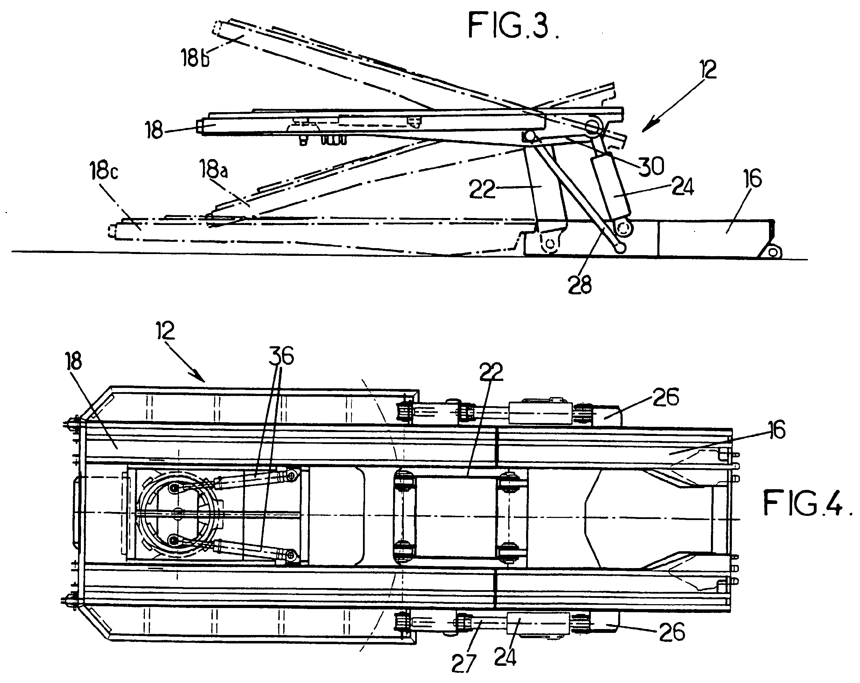

La semi-remorque montrée en figure 1 est destinée au transport de wagons ou de voiture qui n'acceptent que de faibles pentes lors du chargement et du transport. La semi-remorque comprend une plate-forme 10 fixée entre un col de cygne 12 et un arrière train 14 à roues directrices 15. La plate-forme 10 et l'arrière train 14 peuvent avoir une constitution classique et ne seront pas décrits. Le col de cygne 12 comprend un plateau 16 destiné à être fixé à la plate-forme 10 et un bras 18 destiné à reposer sur la sellette 20 d'un tracteur. Le bras et le plateau sont reliés par une bielle 22 articulée à l'avant du plateau autour d'un axe transversal et dans une zone du bras écartée de l'arrière de ce dernier. Lorsque le col de cygne est prévu pour permettre le chargement de véhicules sur rails, il peut avoir la constitution montrée en figure 4. Le plateau 16 et le bras 18 sont constitués chacun par un châssis ayant deux poutres longitudinales munies de rails qui viennent dans le prolongement les uns des autres lorsque le col de cygne est déplié et posé au sol, avec une pente des rails relativement faible, ne dépassant pas 2,5 % dans la plupart des cas. La bielle 22 peut alors être constituée par un caisson de grande rigidité, placé entre les rails.

Les vérins hydrauliques 24, placés de part et d'autre de l'ensemble plateau-bras ont chacun un cylindre articulé sur une bride 26 fixée au plateau, à l'arrière de l'articulation de la bielle 22, et une tige 27 articulée sur un rebord latéral du bras, à l'arrière de ce dernier.

Enfin, deux barres de verrouillage 28 sont articulées sur le plateau, autour d'axes transversaux proches de l'axe d'articulation des vérins sur le plateau. L'autre extrémité de chaque barre 28 est emprisonnée dans un chemin 30 ménagé dans un flasque 32 appartenant au bras et une clavette (non représentée) permet de retenir cette autre extrémité en butée contre la face terminale du chemin de roulement 30, tout en la laissant libre de tourner.

Lorsque les barres 28 sont verrouillées, l'extension du vérin permet d'amener le bras 18 de la position médiane où il est représenté en traits pleins sur la figure 3 à la position 18a où il est représenté en traits mixtes par rotation du bras autour de l'axe commun des extrémités hautes de la bielle et des barres. Inversement, la rétraction du vérin permet d'amener le bras dans la position 18b (en traits mixtes). Dans leur position médiane, les vérins permettent ainsi de donner au plateau une garde au sol nominale, avec une faible pente du plateau et de la plate-forme vers l'avant (figure 1). La rétraction du vérin permet d'amener le plateau vers le sol et éventuellement en contact avec le sol (figure 2). Son extension permet au contraire d'augmenter la garde au sol et de passer un obstacle ou un dos d'âne.

Lorsque les barres sont déverrouillées, l'extension complète du vérin permet de mettre le bras à plat, dans le prolongement du plateau, et autorise ainsi le chargement de voitures ou wagons (position 18c sur la figure 3). Plus généralement, l'angle entre le plateau 16 et le bras 18 est ajustable et le bras 18 peut toujours reposer au sol lors du chargement, ce qui n'est pas possible dans un col de cygne à parallélogramme traditionnel.

En marche normale, la pression exercée dans les vérins pour maintenir le plateau à une hauteur déterminée permet d'évaluer la charge sur le tracteur et de contrôler la masse du chargement.

La figure 4 montre encore des vérins de direction 36, qui ne sont nécessaires que lorsque l'arrière-train est muni d'essieux directeurs.

La disposition des vérins, des bielles et des barres peut être différente de celle qui a été représentée, sous la réserve que les axes transversaux d'articulation de la bielle et du vérin soient aux coins d'un quadrilatère et que l'articulation haute de la barre coïncide sensiblement avec celle de la bielle. Il est préférable que les axes des barres et des bielles sur le bras soient alignés.

En particulier, l'emplacement des vérins et des barres 28 peut être modifié pour que ces éléments ne débordent pas du plateau 16, lorsque par exemple la charge à transporter est un engin à chenilles ou à roues de grande largeur, tel qu'un engin de travaux publics. En rapprochant les vérins et les barres de la bielle 22, on peut faire passer de tels engins à cheval pour les charger et transporter roues et chenilles pendantes. Le plateau 16 et la plate-forme 10 peuvent être monobloc.

## Revendications

1. Col de cygne (12) dépliable pour semi-remorque comprenant un plateau (16) solidarisable d'une plate-forme (10) de transport et un bras (18) d'appui sur une sellette (20) de tracteur, ledit bras (18) étant relié au plateau (16) par une bielle articulée (22) et par au moins un second organe articulé, les points d'articulation de la bielle (22) et dudit second organe étant placés aux coins d'un quadrilatère, les liaisons entre le bras (18) et le plateau (16) comprenant de plus au moins une barre (28) verrouillable sur le plateau (16) et par rapport au bras (18) dans une position où ladite barre (28) fixe la distance entre deux points situés à proximité des extrémités d'une diagonale du quadrilatère, **caractérisé en ce que** ledit second organe est un vérin à double effet (24).

2. Col de cygne selon la revendication 1, **caractérisé en ce que** deux dites barres (28) sont placées chacune de l'un respectivement des deux côtés de l'ensemble plateau (16)-bras (18).

3. Col de cygne selon la revendication 2, **caractérisé en ce que** chaque barre (28) est articulée de façon permanente sur le plateau (16) de façon que la barre (28) puisse tourner sur le plateau (16) autour d'un axe transversal au plateau (16), proche de l'axe d'articulation du vérin (24) sur le plateau (16).

4. Col de cygne selon la revendication 3, **caractérisé en ce que** l'autre extrémité de la barre (28) est verrouillable ou déverrouillable sur le bras (18) par des moyens permettant à la barre (28) de tourner sur le bras (18) autour d'un axe transversal au bras (18), proche de l'axe d'articulation de la bielle (22) sur le bras (18) ou aligné avec ledit axe d'articulation.

5. Col de cygne selon la revendication 4, **caractérisé en ce que** l'extrémité de chaque barre (28) verrouillable sur le bras (18) est guidée par un chemin (30) et vient en butée à l'extrémité du chemin (30) dans la position où ladite barre (28) est verrouillée lors des déplacements sur route.

6. Col de cygne selon l'une quelconque des revendications précédentes, **caractérisé en ce que** le plateau (16) et le bras (18) sont constitués chacun par un châssis ayant deux poutres longitudinales munies de rails qui viennent dans le prolongement les uns des autres lorsque le col de cygne (12) est déplié et la bielle (22) est constituée par un caisson placé entre les rails.

7. Col de cygne selon l'une quelconque des revendications précédentes, **caractérisé en ce qu'**il comporte deux dits vérins hydrauliques (24) placés chacun de l'un respectivement des deux côtés du plateau (16).

## Patentansprüche

1. Klappbarer Schwanenhals (12) für Sattelauflieger, mit einer Plattform (16), die mit einer Transportplattform (10) fest verbindbar ist, und einem Ausleger (18) zum Abstützen auf eine Sattelplatte (20) einer Zugmaschine, wobei besagter Ausleger (18) mit der Plattform (16) über eine Gelenkstange (22) und mindestens ein zweites Gelenkglied verbunden ist, wobei die Anlenkpunkte der Stange (22) und des besagten zweiten Gliedes in den Ecken eines Vierecks angeordnet sind, und die Verbindungen zwischen dem Ausleger (18) und der Plattform (16) außerdem mindestens eine Stange (28) umfassen, die auf der Plattform (16) und bezüglich des Auslegers (18) in einer Position verriegelbar ist, in welcher die besagte Stange (28) den Abstand zwischen zwei Punkten festlegt, die in der Nähe der Enden einer Diagonale des Vierecks liegen, **dadurch gekennzeichnet, dass** das besagte zweite Glied ein doppeltwirkender Hubzylinder (24) ist.

2. Schwanenhals nach Anspruch 1, **dadurch gekennzeichnet, dass** auf jeder der beiden Seiten der Baugruppe Plattform (16)-Ausleger (18) eine der besagten Stangen (28) angeordnet ist.

3. Schwanenhals nach Anspruch 2, **dadurch gekennzeichnet, dass** jede Stange (28) derart dauernd an der Plattform (16) angelenkt ist, dass die Stange (28) sich auf der Plattform (16) um eine Achse quer zur Plattform (16) drehen kann, die nahe bei der Schwenkachse des Hubkolbens (24) auf der Plattform (16) liegt.

4. Schwanenhals nach Anspruch 3, **dadurch gekennzeichnet, dass** das andere Ende der Stange (28) mit dem Ausleger (18) durch Mittel verriegelbar und entriegelbar ist, welche es der Stange (28) ermöglichen, sich gegenüber dem Ausleger (18) um eine quer zum Ausleger (18) verlaufende Achse zu drehen, die nahe bei der Anlenkachse der Stange (22) an dem Ausleger (18) liegt oder mit dieser Anlenkachse fluchtet.

5. Schwanenhals nach Anspruch 4, **dadurch gekennzeichnet, dass** das Ende jeder auf dem Ausleger (18) verriegelbaren Stange (28) durch eine Kulisse (30) geführt ist und gegen das Ende der Kulisse (30) in der Position anschlägt, in der die besagte Stange (28) beim Verfahren auf der Straße verriegelt ist.

6. Schwanenhals nach einem der vorstehenden Ansprüche, **dadurch gekennzeichnet, dass** die Plattform (16) und der Ausleger (16) jeweils durch ein Gestell mit zwei Längsträgern gebildet sind, die mit Schienen versehen sind, welche jeweils in Flucht miteinander liegen, wenn der Schwanenhals (12) ausgeklappt wird, und dass die Stange (22) durch einen zwischen den Schienen angeordneten Kastenträger gebildet ist.

7. Schwanenhals nach einem der vorstehenden Ansprüche, **dadurch gekennzeichnet, dass** er zwei der besagten hydraulischen Hubkolben (24) umfasst, deren einer jeweils auf einer der beiden Seiten der Plattform (16) angeordnet ist.

## Claims

1. Retractable gooseneck (12) for semitrailer, comprising a plate (16) which can be made integrally with a transport platform (10) and a support arm (18) on a tractor fifth wheel (20), said arm (18) being connected to the plate (16) by a knuckle-jointed connecting rod (22) and by at least one second knuckled-jointed member, the articulation points of the connecting rod (22) and of the second member being arranged at the corners of a quadrilateral, the connections between the arm (18) and the plate (16) also comprising at least one bar (28) which can be locked on the plate (16) and in relation to the arm (18) in a position where said bar (28) fixes the distance between two points located in proximity to the ends of a diagonal of the quadrilateral, **characterised in that** said second member is a double-acting power cylinder (24).

2. Gooseneck according to claim 1, **characterised in that** two bars (28) are each placed respectively on one of the two sides of the unit comprising the plate (16) and arm (18).

3. Gooseneck according to claim 2, **characterised in that** each bar (28) is permanently articulated on the plate (16) in such a manner that the bar (28) can pivot on the plate (16) about an axis transverse to the plate (16), close to the articulation axis of the power cylinder (24) on the plate (16).

4. Gooseneck according to claim 3, **characterised in that** the other end of the bar (28) can be locked or unlocked on the arm (18) by means allowing the bar (28) to pivot on the arm (18) about an axis transverse to the arm (18), close to the articulation axis of the connecting rod (22) on the arm or aligned with said articulation axis.

5. Gooseneck according to claim 4, **characterised in that** the end of each bar (28) which can be locked on the arm (18) is guided through a path (30) and abuts the end of the path (30) in the position where said bar (28) is locked during travel.

6. Gooseneck according to any one of the preceding claims, **characterised in that** the plate (16) and the arm (18) are each constituted by a frame with two longitudinal beams equipped with tracks which extend each other when the gooseneck (12) is unfolded and the connecting rod (22) is constituted by a case placed between the tracks.

7. Gooseneck according to any one of the preceding claims, **characterised in that** it comprises said two hydraulic power cylinders (24), each being placed respectively on one of the two sides of the plate (6).
